# EUROPEAN PATENT APPLICATION

(11) **EP 4 667 140 A1**
(43) Date of publication of application: **24.12.2025**
(21) Application number: 25180002.5
(22) Date of filing: 30.05.2025
(51) Int. Cl.: B22F 10/28, B22F 10/366, B22F 12/41, B22F 12/44, B29C 64/153, B33Y 10/00, B33Y 30/00, B22F 10/362, B22F 10/364

(54) **THREE-DIMENSIONAL POWDER BED FUSION ADDITIVE MANUFACTURING APPARATUS AND THREE-DIMENSIONAL POWDER BED FUSION ADDITIVE MANUFACTURING METHOD**

(30) Priority: 18.06.2024 JP 2024098284
(71) Applicant: Jeol Ltd., Akishima-shi, Tokyo 196-8558 (JP)
(72) Inventor: IIDA, Masahiko, Tokyo, 196-8558 (JP); SATO, Takashi, Tokyo, 196-8558 (JP); KAWAKAMI, Masahiko, Tokyo, 196-8558 (JP)
(74) Representative: Boult Wade Tennant LLP

(57) **Abstract**

A beam emitter (2) of a three-dimensional powder bed fusion additive manufacturing apparatus (1) reflecting one aspect of the present invention irradiates a powder layer spread on a stage (6) with a beam. A beam deflector (10) deflects the beam emitted from the beam emitter (2). A controller (30) controls the beam deflector (10). A point to be irradiated with the beam next in the powder layer is defined as a next irradiation point, and points that have been irradiated with the beam and solidified are defined as solidified points. The controller (30) controls the beam deflector (10) to irradiate at least one of the solidified points adjacent to the next irradiation point with the beam and then irradiate the next irradiation point with the beam, or to irradiate the next irradiation point with the beam and then irradiate at least one of the solidified points adjacent to the next irradiation point with the beam before the next irradiation point is solidified.

## Description

### BACKGROUND

### Technical Field

The present invention relates to a three-dimensional powder bed fusion additive manufacturing (PBF-AM) apparatus and a three-dimensional PBF-AM method.

### Related Art

In recent years, there is known a three-dimensional PBF-AM apparatus that builds a three-dimensional object by laminating layers in which a powder material is coagulated. The three-dimensional PBF-AM apparatus irradiates the powder material spread on a stage with a beam to melt and coagulate the powder material.

Patent Literature 1 describes a three-dimensional PBF-AM apparatus. The three-dimensional PBF-AM apparatus described in Patent Literature 1 divides a build region of a powder material into a plurality of lines, and performs beam scanning sequentially on each of the lines to melt the powder material in the build region line by line. Furthermore, dummy scanning is performed to scan the beam in a state that does not cause melting of the powder material between an end of beam scanning of an M-th (M is a natural number) line and a start of beam scanning of an (M+1)th line.

### Citation List

### Patent Literature

Patent Literature 1: JP 2022-144439 A

By the way, the three-dimensional PBF-AM apparatus is desired to improve the quality of a three-dimensional structure to be built.

An object of the present invention is to provide a three-dimensional PBF-AM apparatus and a three-dimensional PBF-AM method capable of improving quality of a three-dimensional structure to be built in consideration of the above problem.

### SUMMARY

In order to solve the above problem and achieve the object of the present invention, a three-dimensional PBF-AM apparatus reflecting one aspect of the present invention includes a stage, a beam emitter, a beam deflector, and a controller. A powder layer formed of a powder material is spread on the stage. The beam emitter emits a beam toward the powder layer spread on the stage. The beam deflector deflects the beam emitted from the beam emitter. The controller controls the beam deflector. A point to be irradiated with the beam next in the powder layer is defined as a next irradiation point, and points that have been irradiated with the beam and solidified are defined as solidified points. The controller controls the beam deflector to irradiate at least one of the solidified points adjacent to the next irradiation point with the beam and then irradiate the next irradiation point with the beam, or to irradiate the next irradiation point with the beam and then irradiate at least one of the solidified points adjacent to the next irradiation point with the beam before the next irradiation point is solidified.

A three-dimensional PBF-AM method reflecting one aspect of the present invention includes an activation step and a main irradiation step. A point to be irradiated with the beam next in a powder layer spread on a stage is defined as a next irradiation point, and points that have been irradiated with the beam and solidified are defined as solidified points. In the activation step, the controller controls the beam deflector to irradiate at least one of the solidified points adjacent to the next irradiation point with the beam. In the main irradiation step, the controller controls the beam deflector to irradiate the next irradiation point with the beam. The activation step is executed at least one of before and after the main irradiation step.

According to the three-dimensional PBF-AM apparatus and the three-dimensional PBF-AM method configured as described above, the quality of the three-dimensional structure to be built can be improved.

### BRIEF DESCRIPTION OF DRAWINGS

FIG. 1 is a schematic configuration diagram illustrating a three-dimensional PBF-AM apparatus according to an embodiment;
FIG. 2 is a block diagram illustrating a functional configuration of a beam position controller of the three-dimensional PBF-AM apparatus according to the embodiment;
FIG. 3 is a view for describing a first irradiation pattern illustrating a first example of a beam irradiation step of the three-dimensional PBF-AM apparatus according to the embodiment;
FIG. 4 is a view for describing a second irradiation pattern illustrating a second example of the beam irradiation step of the three-dimensional PBF-AM apparatus according to the embodiment;
FIG. 5 is a view for describing a third irradiation pattern illustrating a third example of the beam irradiation step of the three-dimensional PBF-AM apparatus according to the embodiment;
FIG. 6 is a view for describing a fourth irradiation pattern illustrating a fourth example of the beam irradiation step of the three-dimensional PBF-AM apparatus according to the embodiment;
FIG. 7 is a view for describing a fifth irradiation pattern illustrating a fifth example of the beam irradiation step of the three-dimensional PBF-AM apparatus according to the embodiment;
FIG. 8 is a view for describing a sixth irradiation pattern illustrating a sixth example of the beam irradiation step of the three-dimensional PBF-AM apparatus according to the embodiment;
FIG. 9 is a view for describing a seventh irradiation pattern illustrating a seventh example of the beam irradiation step of the three-dimensional PBF-AM apparatus according to the embodiment; and
FIG. 10 is a view for describing an eighth irradiation pattern illustrating an eighth example of the beam irradiation step of the three-dimensional PBF-AM apparatus according to the embodiment.

### DETAILED DESCRIPTION

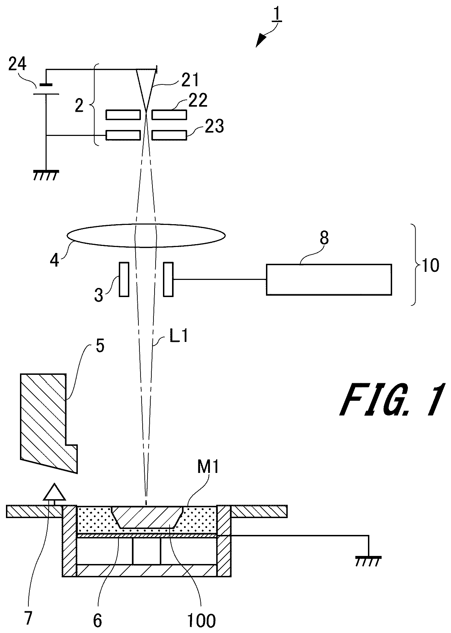

Hereinafter, an embodiment of a three-dimensional PBF-AM apparatus and a three-dimensional PBF-AM method of the present invention will be described with reference to FIGS. 1 to 10. In the drawings, common members in drawings are denoted by the same reference numerals.

### [Three-Dimensional PBF-AM apparatus]

First, a configuration of a three-dimensional PBF-AM apparatus according to the embodiment will be described with reference to FIG. 1.

FIG. 1 is an explanatory diagram schematically illustrating the three-dimensional PBF-AM apparatus according to the embodiment.

A three-dimensional PBF-AM apparatus 1 illustrated in FIG. 1 is an apparatus that irradiates a powder material with an electron beam to melt the powder material, and laminates layers of the coagulated powder material to build a three-dimensional object. As illustrated in FIG. 1, the three-dimensional PBF-AM apparatus 1 includes an electron gun 2 that emits an electron beam L1, a lens 4, a powder material storage 5, a stage 6, a powder layer raking arm 7, and a beam deflector 10. The electron gun 2 corresponds to a beam emitter according to the present invention.

The electron gun 2, a deflection amplifier 3, the lens 4, the powder material storage 5, the stage 6, and the powder layer raking arm 7 are disposed in a build chamber (not illustrated). A vacuum pump is connected to the build chamber. The vacuum pump removes gas inside the build chamber. Thus, the internal space of the build chamber is evacuated.

The electron gun 2 includes an emitter 21, an extraction electrode 22, and an acceleration electrode 23. The emitter 21 and the acceleration electrode 23 are connected to an acceleration power source 24. The extraction electrode 22 is connected to an extraction potential generator (not illustrated). The extraction potential generator applies an extraction potential to the extraction electrode 22. When the extraction potential is applied, the extraction electrode 22 extracts electrons from the emitter 21.

The acceleration electrode 23 accelerates the electrons extracted from the emitter 21 by an acceleration potential applied by the acceleration power source 24 to generate the electron beam L1. The acceleration electrode 23 directs the generated electron beam L1 toward the lens 4 and the deflection amplifier 3.

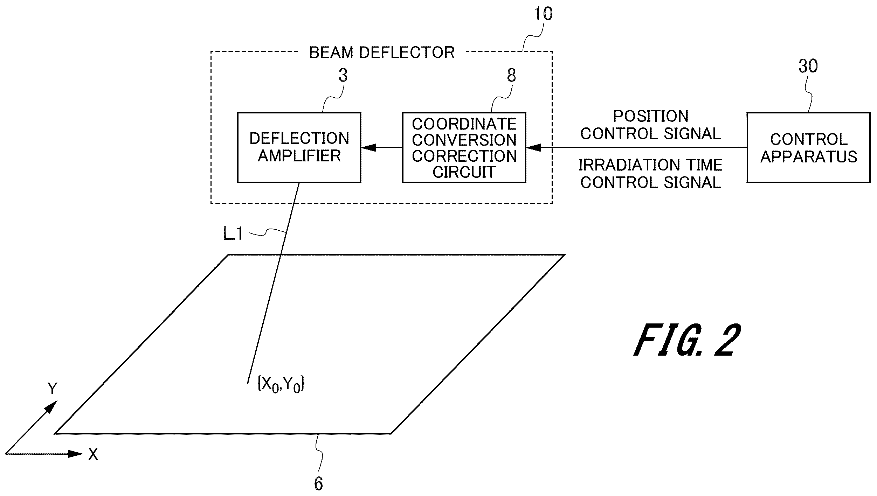

The deflection amplifier 3, which will be described later, of the beam deflector 10 is disposed between the electron gun 2 and the stage 6. Note that a detailed configuration of the beam deflector 10 will be described later with reference to FIG. 2.

The lens 4 is disposed between the deflection amplifier 3 and the electron gun 2. The lens 4 focuses the electron beam L1 emitted from the electron gun 2 by electromagnetic action. Then, the lens 4 brings the electron beam L1 into focus on the stage 6.

The stage 6 is formed in a substantially flat plate shape. The stage 6 is supported so as to be movable in the vertical direction by a driving apparatus (not illustrated). A powder material M1 is supplied from the powder material storage 5 to one surface of the stage 6. Examples of the powder material M1 include metal such as titanium, aluminum, or iron, and solid materials such as ceramics and organic resins.

The powder layer raking arm 7 is disposed near the stage 6. The powder layer raking arm 7 is supported so as to be movable in the horizontal direction on the one surface of the stage 6 by a movement mechanism (not illustrated). When the powder layer raking arm 7 moves in the horizontal direction on the one surface of the stage 6, the powder material M1 is spread on the one surface of the stage 6 at a predetermined height (for example, a diameter of one particle of the powder material M1).

When a layer (powder layer) of the powder material M1 spread on the stage 6 is irradiated with the electron beam L1, the powder material M1 melts and then coagulates. After the powder material M1 melts and coagulates, the stage 6 is further lowered downward in the vertical direction by the driving apparatus (not illustrated).

Then, the powder material storage 5 supplies a new powder material M1, and the powder layer raking arm 7 spreads the powder material M1 at a predetermined height.

### [Beam Deflector]

Next, a configuration of the beam deflector 10 will be described with reference to FIG. 2.

FIG. 2 is a block diagram illustrating a functional configuration of the beam deflector 10.

As illustrated in FIG. 2, the beam deflector 10 includes the deflection amplifier 3 and a coordinate conversion correction circuit 8. The deflection amplifier 3 is disposed between the electron gun 2 and the stage 6. The deflection amplifier 3 deflects the electron beam L1 emitted from the electron gun 2 to a predetermined position of the stage 6.

The coordinate conversion correction circuit 8 controls the operation of the deflection amplifier 3. The coordinate conversion correction circuit 8 is connected to a control apparatus 30. For example, a personal computer (PC) can be adopted as the control apparatus 30. The control apparatus 30 transmits a position command signal and an irradiation time command signal to the coordinate conversion correction circuit 8. The position command signal is a signal indicating a coordinate position indicating an irradiation position of the electron beam L1. The irradiation time command signal is a signal indicating an irradiation time of the electron beam L1.

The coordinate conversion correction circuit 8 generates an amplifier control signal according to the commanded coordinate position and irradiation time based on the received position command signal and irradiation time command signal. The coordinate conversion correction circuit 8 operates the deflection amplifier 3 on the basis of the generated amplifier control signal. Thus, the deflection amplifier 3 deflects the electron beam L1 emitted from the electron gun 2 to the commanded coordinate position of the stage 6.

### [First Irradiation Pattern]

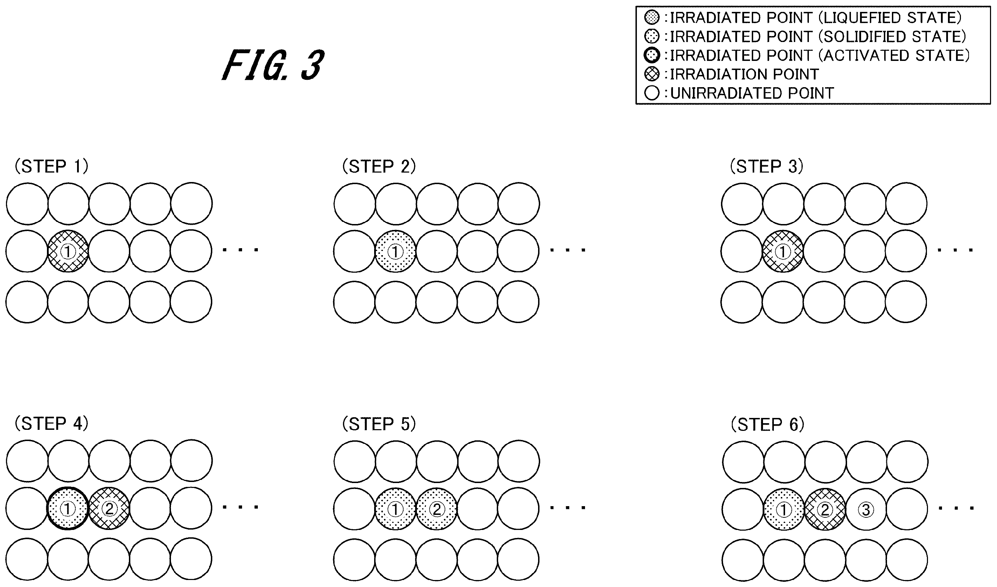

Next, a first irradiation pattern illustrating a first example of a beam irradiation step performed by the control apparatus 30 will be described with reference to FIG. 3.

FIG. 3 is a view for describing the first irradiation pattern illustrating the beam irradiation step.

Points to be irradiated with the electron beam L1 illustrated in FIG. 3 are arranged in a first direction X parallel to the horizontal direction and a second direction Y parallel to the horizontal direction and substantially perpendicular to the first direction X. In FIG. 3, the first direction X is a left-right direction, and the second direction Y is an up-down direction. Note that the points to be irradiated with the electron beam L1 are not limited to being arranged in two directions that intersect substantially perpendicularly, and may be arranged, for example, in two directions that intersect at any angle.

Hereinafter, a point before being irradiated with the electron beam L1 is referred to as an "unirradiated point". In the first irradiation pattern, unirradiated points arranged in the first direction X are irradiated with the electron beam L1 in order from the left. As illustrated in FIG. 3, unirradiated points are arranged in the first direction X above and below a row of the unirradiated points to be irradiated with the electron beam L1.

The control apparatus 30 controls the beam deflector 10 to irradiate positions corresponding to the first irradiation pattern with the electron beam L1. In the first irradiation pattern, unirradiated points arranged in the first direction X are irradiated with the electron beam L1 in order from the left.

In the first irradiation pattern, the beam deflector 10 first irradiates any unirradiated point 1 with the electron beam L1 (Step 1). Hereinafter, a point that has been irradiated with the electron beam L1 is referred to as an "irradiation point". Further, an unirradiated point planned to be irradiated with the electron beam L1 next is referred to as a "next irradiation point". The irradiation point 1 melts to turn into a liquefied state by being irradiated with the electron beam L1.

Next, the beam deflector 10 irradiates unirradiated point n (not illustrated), which is at least not adjacent to but apart from the irradiation point 1, with the electron beam L1 (Step 2). The irradiation point n melts to turn into the liquefied state by being irradiated with the electron beam L1. On the other hand, the irradiation point 1 coagulates to turn into a solidified state. Hereinafter, a point in the solidified state is referred to as a "solidified point".

The reason why the beam deflector 10 irradiates the point n with the electron beam L1 is to wait for a lapse of time for turning the irradiation point 1 into the solidified point 1. Therefore, the beam deflector 10 may irradiate a plurality of points, which are at least not adjacent to but apart from the irradiation point 1, with the electron beam L1 before the irradiation point 1 turns into the solidified point 1. In this case, the plurality of points are set at positions which are not adjacent to but apart from each other.

In the first irradiation pattern, an unirradiated point located on the right of the solidified point 1 is set as next irradiation point 2. Next, before irradiating the next irradiation point 2 with the electron beam L1, the beam deflector 10 irradiates the solidified point 1 adjacent to the next irradiation point 2 with the electron beam L1 (Step 3). This turns the solidified point 1 into an activated state. Hereinafter, a point in the activated state is referred to as an "activated point". Further, a step of irradiating the solidified point with the electron beam to bring the activated state corresponds to an activation step according to the present invention.

The activated state is a state in which a material in the solidified state is warmed by the electron beam L1.
The material in the activated state may be in the melted and liquefied state or may remain in the solidified state. As the solidified point 1 adjacent to the irradiation point 2 is turned into the activated point 1, the irradiation point 2 irradiated with the electron beam L1 is easily warmed.

Next, the beam deflector 10 irradiates the next irradiation point 2 with the electron beam L1 (Step 4). The irradiation point 2 melts to turn into the liquefied state by being irradiated with the electron beam L1. At this time, the activated point 1 in the activated state does not inhibit the melting of the irradiation point 2. Thus, the irradiation point 2 can be appropriately melted. Further, the activated point 1 is more strongly bonded to the irradiation point 2 than the solidified point 1. As a result, the quality of the three-dimensional structure to be built can be improved.

Next, the beam deflector 10 irradiates unirradiated point m (not illustrated) at a position, which is at least not adjacent to but apart from the irradiation point 2, with the electron beam L1 (Step 5). The irradiation point m melts to turn into the liquefied state by being irradiated with the electron beam L1. On the other hand, the activated point 1 and the irradiation point 2 coagulate to turn into the solidified point 1 and the solidified point 2.

Next, before irradiating next irradiation point 3 located on the right of the solidified point 2 with the electron beam L1, the beam deflector 10 irradiates the solidified point 2 adjacent to the next irradiation point 3 with the electron beam L1 (Step 6). This brings the solidified point 2 into the activated state.

Thereafter, the beam deflector 10 irradiates the next irradiation point 3 with the electron beam L1. As described above, after Step 5, irradiation of the electron beam L1 is repeated similarly to Step 2 to Step 4 while shifting a next irradiation point one by one to the right.

### [Second Irradiation Pattern]

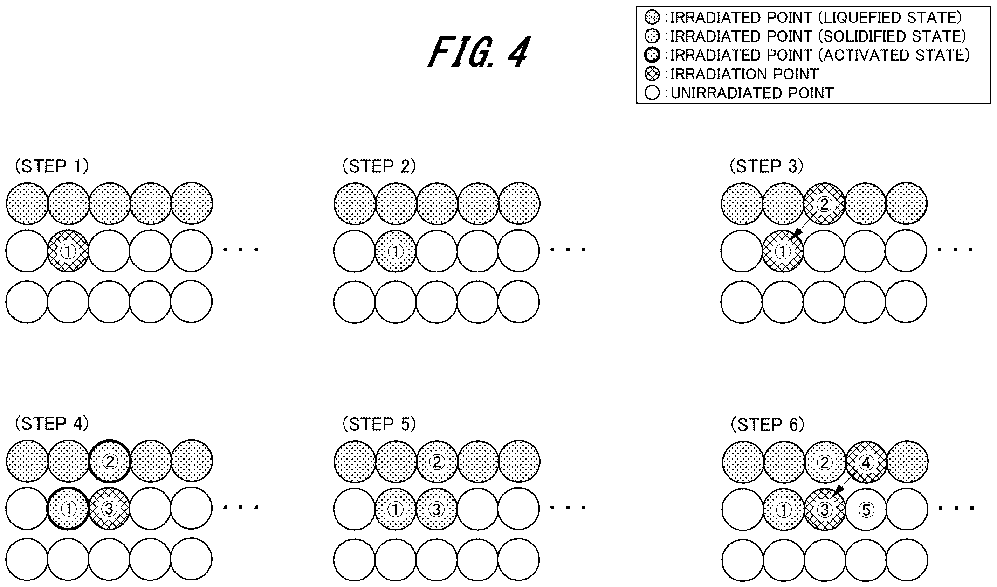

Next, a second irradiation pattern illustrating a second example of the beam irradiation step performed by the control apparatus 30 will be described with reference to FIG. 4.

FIG. 4 is a view for describing the second irradiation pattern illustrating the second example of the beam irradiation step.

Points to be irradiated with the electron beam L1 illustrated in FIG. 4 are arranged in the first direction X and the second direction Y. The control apparatus 30 controls the beam deflector 10 to irradiate positions corresponding to the second irradiation pattern with the electron beam L1. In the second irradiation pattern, unirradiated points arranged in the first direction X are irradiated with the electron beam L1 in order from the left. As illustrated in FIG. 4, unirradiated points are arranged in the first direction X below a row of the unirradiated points to be irradiated with the electron beam L1. Solidified points are arranged in the first direction X above the row of the unirradiated points to be irradiated with the electron beam L1.

In the second irradiation pattern, the beam deflector 10 first irradiates any unirradiated point 1 with the electron beam L1 (Step 1). There are solidified points on an upper row among adjacent points to the unirradiated point 1. The irradiation point 1 melts to turn into a liquefied state by being irradiated with the electron beam L1.

Next, the beam deflector 10 irradiates unirradiated point n (not illustrated), which is at least not adjacent to but apart from the irradiation point 1, with the electron beam L1 (Step 2). The irradiation point n melts to turn into the liquefied state by being irradiated with the electron beam L1. On the other hand, the irradiation point 1 coagulates to turn into the solidified point 1.

In the second irradiation pattern, an unirradiated point located on the right of the solidified point 1 is set as next irradiation point 3. Next, before irradiating the next irradiation point 3 with the electron beam L1, the beam deflector 10 irradiates solidified point 2, which is adjacent to the next irradiation point 3 and located above the next irradiation point 3, with the electron beam L1. Furthermore, the beam deflector 10 irradiates the solidified point 1, adjacent to the next irradiation point 3 and located on the left of the next irradiation point 3, with the electron beam L1 (Step 3). Thus, the solidified point 1 and the solidified point 2 turn into the activated point 1 and the activated point 2.

The solidified point 2 is solidified earlier than the solidified point 1. In the second irradiation pattern, solidified points are irradiated with the electron beam L1 in order from one solidified earlier. This makes it possible to shorten the time required to turn a plurality of solidified points into activated points so that it is possible to efficiently form the activated points.

Next, the beam deflector 10 irradiates the next irradiation point 3 with the electron beam L1 (Step 4). The irradiation point 3 melts to turn into the liquefied state by being irradiated with the electron beam L1. At this time, the activated point 1 and the activated point 2 in the activated state do not inhibit the melting of the irradiation point 3. Thus, the irradiation point 3 can be appropriately melted. The activated points 1 and 2 are more strongly bonded to the irradiation point 3 than the solidified points 1 and 2. As a result, the quality of the three-dimensional structure to be built can be improved.

Next, the beam deflector 10 irradiates unirradiated point m (not illustrated) at a position, which is at least not adjacent to but apart from the irradiation point 3, with the electron beam L1 (Step 5). The irradiation point m melts to turn into the liquefied state by being irradiated with the electron beam L1. On the other hand, the activated point 1, the activated point 2, and the irradiation point 3 coagulate to turn into the solidified point 1, the solidified point 2, and the solidified point 3.

In the second irradiation pattern, an unirradiated point located on the right of the solidified point 3 is set as next irradiation point 5. Next, before irradiating the next irradiation point 5 with the electron beam L1, the beam deflector 10 irradiates solidified point 4, which is adjacent to the next irradiation point 5 and located above the next irradiation point 5, with the electron beam L1. Further, the beam deflector 10 irradiates the solidified point 3, adjacent to the next irradiation point 5 and located on the left of the next irradiation point 5, with the electron beam L1 (Step 6). Thus, the solidified point 3 and the solidified point 4 turn into the activated point 3 and the activated point 4.

Thereafter, the beam deflector 10 irradiates the next irradiation point 5 with the electron beam L1. As described above, after Step 5, irradiation of the electron beam L1 is repeated similarly to Step 2 to Step 4 while shifting a next irradiation point one by one to the right.

Note that the beam deflector 10 may irradiate a solidified point located above the unirradiated point 1 with the electron beam L1 before irradiating the unirradiated point 1 with the electron beam L1 in Step 1 of the second irradiation pattern. In this case, the solidified point located above the unirradiated point 1 turns into the activated point, and does not inhibit the melting of the irradiation point 1. As a result, the irradiation point 1 can be appropriately melted.

### [Third Irradiation Pattern]

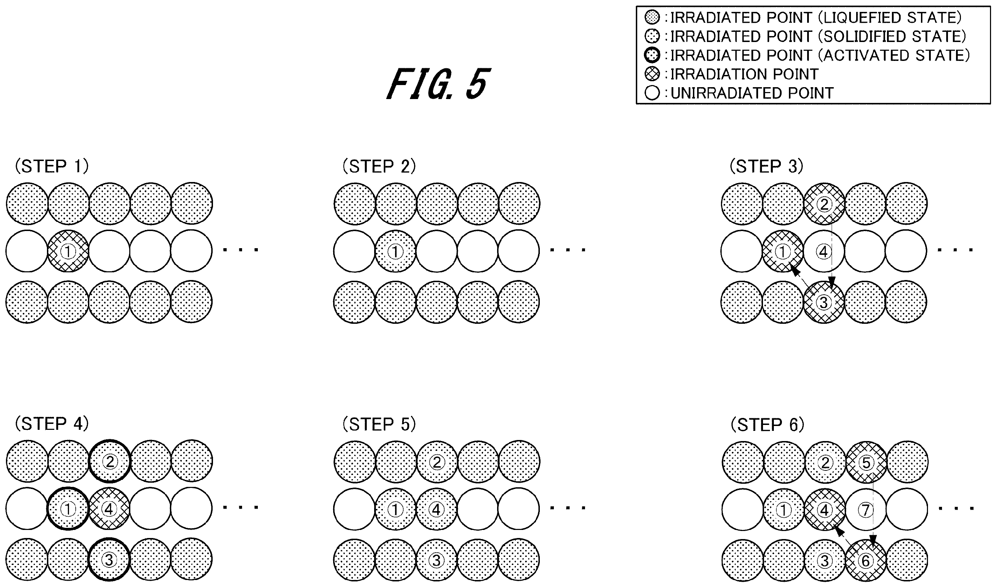

Next, a third irradiation pattern illustrating a third example of the beam irradiation step performed by the control apparatus 30 will be described with reference to FIG. 5.

FIG. 5 is a view illustrating the third irradiation pattern illustrating the third example of the beam irradiation step.

Points to be irradiated with the electron beam L1 illustrated in FIG. 5 are arranged in the first direction X and the second direction Y. The control apparatus 30 controls the beam deflector 10 to irradiate positions corresponding to the third irradiation pattern with the electron beam L1. In the third irradiation pattern, unirradiated points arranged in the first direction X are irradiated with the electron beam L1 in order from the left. As illustrated in FIG. 5, solidified points are arranged in the first direction X above and below a row of unirradiated points to be irradiated with the electron beam L1.

In the third irradiation pattern, the beam deflector 10 first irradiates any unirradiated point 1 with the electron beam L1 (Step 1). There are solidified points on upper and lower rows among adjacent points to the unirradiated point 1. The irradiation point 1 melts to turn into a liquefied state by being irradiated with the electron beam L1.

Next, the beam deflector 10 irradiates unirradiated point n (not illustrated), which is at least not adjacent to but apart from the irradiation point 1, with the electron beam L1 (Step 2). The irradiation point n melts to turn into the liquefied state by being irradiated with the electron beam L1. On the other hand, the irradiation point 1 coagulates to turn into the solidified point 1.

In the third irradiation pattern, an unirradiated point located on the right of the solidified point 1 is set as next irradiation point 4. Next, before irradiating the next irradiation point 4 with the electron beam L1, the beam deflector 10 irradiates solidified point 2, which is adjacent to the next irradiation point 4 and located above the next irradiation point 4, with the electron beam L1. Further, the beam deflector 10 irradiates solidified point 3, adjacent to the next irradiation point 4 and located below the next irradiation point 4, with the electron beam L1. Furthermore, the beam deflector 10 irradiates the solidified point 1, adjacent to the next irradiation point 4 and located on the left of the next irradiation point 4, with the electron beam L1 (Step 3). Thus, the solidified points 1 to 3 turn into the activated points 1 to 3.

The solidified point 2 is solidified earlier than the solidified point 1 and the solidified point 3. Further, the solidified point 3 is solidified earlier than the solidified point 1. In the third irradiation pattern, solidified points are irradiated with the electron beam L1 in order from one solidified earlier. This makes it possible to shorten the time required to turn a plurality of solidified points into activated points so that it is possible to efficiently form the activated points.

Next, the beam deflector 10 irradiates the next irradiation point 4 with the electron beam L1 (Step 4). The irradiation point 4 melts to turn into the liquefied state by being irradiated with the electron beam L1. At this time, the activated points 1 to 3 in the activated state do not inhibit the melting of the irradiation point 4. Thus, the irradiation point 4 can be appropriately melted. The activated points 1 to 3 are more strongly bonded to the irradiation point 4 than the solidified points 1 to 3. As a result, the quality of the three-dimensional structure to be built can be improved.

Next, the beam deflector 10 irradiates unirradiated point m (not illustrated) at a position, which is at least not adjacent to but apart from the irradiation point 4, with the electron beam L1 (Step 5). The irradiation point m melts to turn into the liquefied state by being irradiated with the electron beam L1. On the other hand, the activated points 1 to 3 and the irradiation point 4 coagulate to turn into the solidified points 1 to 4.

In the third irradiation pattern, an unirradiated point located on the right of the solidified point 4 is set as next irradiation point 7. Next, before irradiating the next irradiation point 7 with the electron beam L1, the beam deflector 10 irradiates solidified point 5, which is adjacent to the next irradiation point 7 and located above the next irradiation point 7, with the electron beam L1. Further, the beam deflector 10 irradiates solidified point 6, adjacent to the next irradiation point 7 and located below the next irradiation point 7, with the electron beam L1. Furthermore, the beam deflector 10 irradiates the solidified point 4, adjacent to the next irradiation point 7 and located on the left of the next irradiation point 7, with the electron beam L1 (Step 6). Thus, the solidified points 4 to 6 turn into the activated points 4 to 6.

Thereafter, the beam deflector 10 irradiates the next irradiation point 7 with the electron beam L1. As described above, after Step 5, irradiation of the electron beam L1 is repeated similarly to Step 2 to Step 4 while shifting a next irradiation point one by one to the right.

Note that the beam deflector 10 may irradiate solidified points located above and below the unirradiated point 1 with the electron beam L1 before irradiating the unirradiated point 1 with the electron beam L1 in Step 1 of the third irradiation pattern. In this case, two solidified points located above and below the unirradiated point 1 turn into two activated points, and do not inhibit the melting of the irradiation point 1. As a result, the irradiation point 1 can be appropriately melted.

### [Fourth Irradiation Pattern]

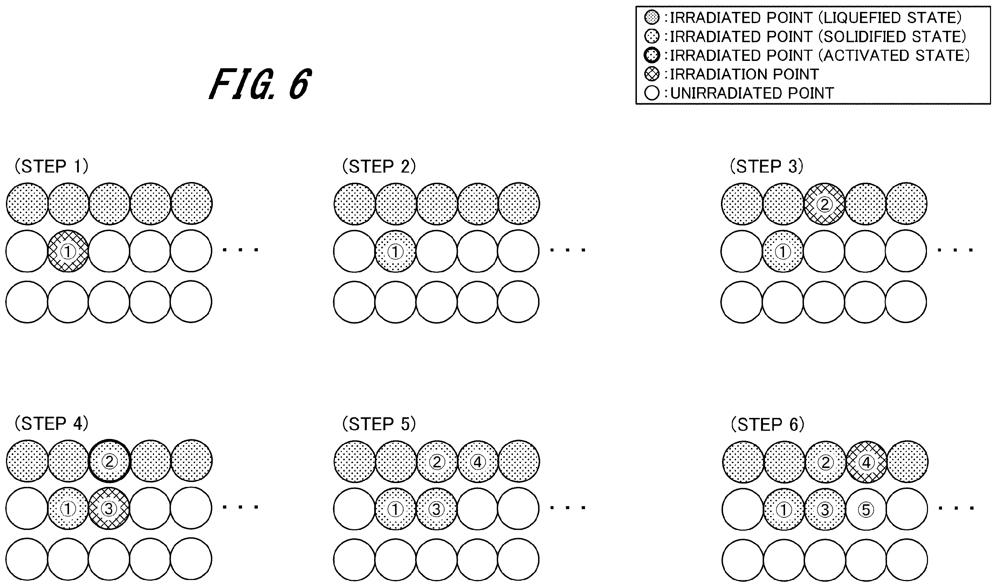

Next, a fourth irradiation pattern illustrating a fourth example of the beam irradiation step performed by the control apparatus 30 will be described with reference to FIG. 6.

FIG. 6 is a view illustrating the fourth irradiation pattern illustrating the fourth example of the beam irradiation step.

Points to be irradiated with the electron beam L1 illustrated in FIG. 6 are arranged in the first direction X and the second direction Y. The control apparatus 30 controls the beam deflector 10 to irradiate positions corresponding to the fourth irradiation pattern with the electron beam L1. In the fourth irradiation pattern, unirradiated points arranged in the first direction X are irradiated with the electron beam L1 in order from the left. As illustrated in FIG. 6, unirradiated points are arranged in the first direction X below a row of the unirradiated points to be irradiated with the electron beam L1. Solidified points are arranged in the first direction X above the row of the unirradiated points to be irradiated with the electron beam L1.

In the fourth irradiation pattern, the beam deflector 10 first irradiates any unirradiated point 1 with the electron beam L1 (Step 1). There are solidified points on an upper row among adjacent points to the unirradiated point 1. The irradiation point 1 melts to turn into a liquefied state by being irradiated with the electron beam L1.

Next, the beam deflector 10 irradiates unirradiated point n (not illustrated), which is at least not adjacent to but apart from the irradiation point 1, with the electron beam L1 (Step 2). The irradiation point n melts to turn into the liquefied state by being irradiated with the electron beam L1. On the other hand, the irradiation point 1 coagulates to turn into the solidified point 1.

In the fourth irradiation pattern, an unirradiated point located on the right of the solidified point 1 is set as next irradiation point 3. Next, before irradiating the next irradiation point 3 with the electron beam L1, the beam deflector 10 irradiates solidified point 2, which is adjacent to the next irradiation point 3 and located above the next irradiation point 3, with the electron beam L1 (Step 3). Thus, the solidified point 2 turns into the activated point 2.

Next, the beam deflector 10 irradiates the next irradiation point 3 with the electron beam L1 (Step 4). The irradiation point 3 melts to turn into the liquefied state by being irradiated with the electron beam L1. At this time, the activated point 2 in the activated state does not inhibit the melting of the irradiation point 3. Thus, the irradiation point 3 can be appropriately melted. The activated point 2 is more strongly bonded to the irradiation point 3 than the solidified point 2. As a result, the quality of the three-dimensional structure to be built can be improved.

Next, the beam deflector 10 irradiates unirradiated point m (not illustrated) at a position, which is at least not adjacent to but apart from the irradiation point 3, with the electron beam L1 (Step 5). The irradiation point m melts to turn into the liquefied state by being irradiated with the electron beam L1. On the other hand, the activated point 2 and the irradiation point 3 coagulate to turn into the solidified point 2 and the solidified point 3.

In the fourth irradiation pattern, an unirradiated point located on the right of the solidified point 3 is set as next irradiation point 5. Next, before irradiating the next irradiation point 5 with the electron beam L1, the beam deflector 10 irradiates solidified point 4, which is adjacent to the next irradiation point 5 and located above the next irradiation point 5, with the electron beam L1 (Step 6). Thus, the solidified point 4 turns into the activated point 4.

Thereafter, the beam deflector 10 irradiates the next irradiation point 5 with the electron beam L1. As described above, after Step 5, irradiation of the electron beam L1 is repeated similarly to Step 2 to Step 4 while shifting a next irradiation point one by one to the right.

Note that the beam deflector 10 may irradiate a solidified point located above the unirradiated point 1 with the electron beam L1 before irradiating the unirradiated point 1 with the electron beam L1 in Step 1 of the fourth irradiation pattern. In this case, the solidified point located above the unirradiated point 1 turns into the activated point, and does not inhibit the melting of the irradiation point 1. As a result, the irradiation point 1 can be appropriately melted.

### [Fifth Irradiation Pattern]

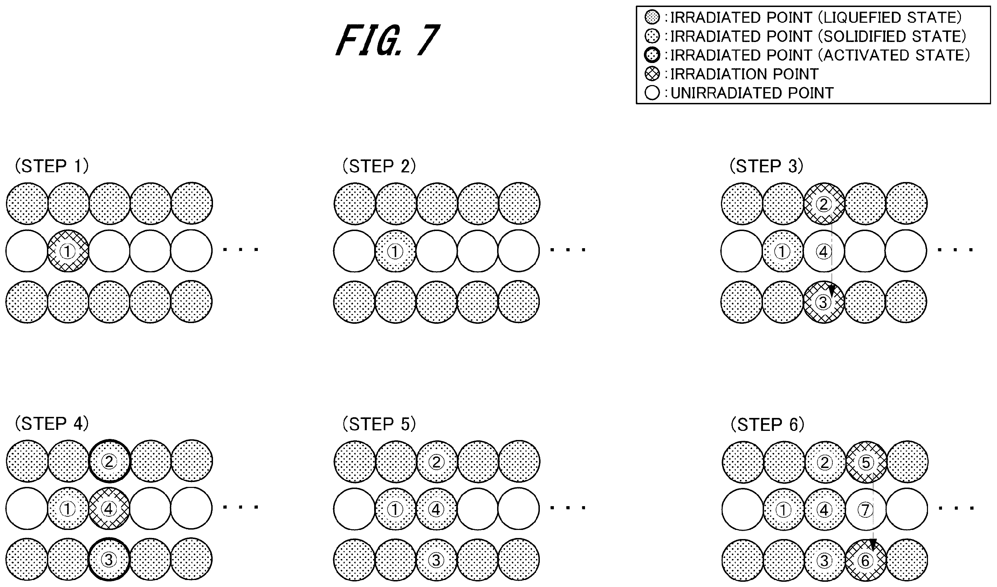

Next, a fifth irradiation pattern illustrating a fifth example of the beam irradiation step performed by the control apparatus 30 will be described with reference to FIG. 7.

FIG. 7 is a view illustrating the fifth irradiation pattern illustrating the fifth example of the beam irradiation step.

Points to be irradiated with the electron beam L1 illustrated in FIG. 7 are arranged in the first direction X and the second direction Y. The control apparatus 30 controls the beam deflector 10 to irradiate positions corresponding to the fifth irradiation pattern with the electron beam L1. In the fifth irradiation pattern, unirradiated points arranged in the first direction X are irradiated with the electron beam L1 in order from the left. As illustrated in FIG. 7, solidified points are arranged in the first direction X above and below a row of unirradiated points to be irradiated with the electron beam L1.

In the fifth irradiation pattern, the beam deflector 10 first irradiates any unirradiated point 1 with the electron beam L1 (Step 1). There are solidified points on upper and lower rows among adjacent points to the unirradiated point 1. The irradiation point 1 melts to turn into a liquefied state by being irradiated with the electron beam L1.

Next, the beam deflector 10 irradiates unirradiated point n (not illustrated), which is at least not adjacent to but apart from the irradiation point 1, with the electron beam L1 (Step 2). The irradiation point n melts to turn into the liquefied state by being irradiated with the electron beam L1. On the other hand, the irradiation point 1 coagulates to turn into the solidified point 1.

In the fifth irradiation pattern, an unirradiated point located on the right of the solidified point 1 is set as next irradiation point 4. Next, before irradiating the next irradiation point 4 with the electron beam L1, the beam deflector 10 irradiates solidified point 2, which is adjacent to the next irradiation point 4 and located above the next irradiation point 4, with the electron beam L1. Furthermore, the beam deflector 10 irradiates solidified point 3, adjacent to the next irradiation point 4 and located below the next irradiation point 4, with the electron beam L1 (Step 3). Thus, the solidified point 2 and the solidified point 3 turn into the activated point 2 and the activated point 3.

The solidified point 2 is solidified earlier than the solidified point 3. In the fifth irradiation pattern, solidified points are irradiated with the electron beam L1 in order from one solidified earlier. This makes it possible to shorten the time required to turn a plurality of solidified points into activated points so that it is possible to efficiently form the activated points.

Next, the beam deflector 10 irradiates the next irradiation point 4 with the electron beam L1 (Step 4). The irradiation point 4 melts to turn into the liquefied state by being irradiated with the electron beam L1. At this time, the activated points 2 and 3 in the activated state do not inhibit the melting of the irradiation point 4. The activated points 2 and 3 are more strongly bonded to the irradiation point 4 than the solidified points 2 and 3. Thus, the irradiation point 4 can be appropriately melted. As a result, the quality of the three-dimensional structure to be built can be improved.

Next, the beam deflector 10 irradiates unirradiated point m (not illustrated) at a position, which is at least not adjacent to but apart from the irradiation point 4, with the electron beam L1 (Step 5). The irradiation point m melts to turn into the liquefied state by being irradiated with the electron beam L1. On the other hand, the activated points 2 to 3 and the irradiation point 4 coagulate to turn into the solidified points 2 to 4.

In the fifth irradiation pattern, an unirradiated point located on the right of the solidified point 4 is set as next irradiation point 7. Next, before irradiating the next irradiation point 7 with the electron beam L1, the beam deflector 10 irradiates solidified point 5, which is adjacent to the next irradiation point 7 and located above the next irradiation point 7, with the electron beam L1. Furthermore, the beam deflector 10 irradiates solidified point 6, adjacent to the next irradiation point 7 and located below the next irradiation point 7, with the electron beam L1 (Step 6). Thus, the solidified points 5 and 6 turn into the activated points 5 and 6.

Thereafter, the beam deflector 10 irradiates the next irradiation point 7 with the electron beam L1. As described above, after Step 5, irradiation of the electron beam L1 is repeated similarly to Step 2 to Step 4 while shifting a next irradiation point one by one to the right.

Note that the beam deflector 10 may irradiate solidified points located above and below the unirradiated point 1 with the electron beam L1 before irradiating the unirradiated point 1 with the electron beam L1 in Step 1 of the fifth irradiation pattern. In this case, two solidified points located above and below the unirradiated point 1 turn into two activated points, and do not inhibit the melting of the irradiation point 1. As a result, the irradiation point 1 can be appropriately melted.

### [Sixth Irradiation Pattern]

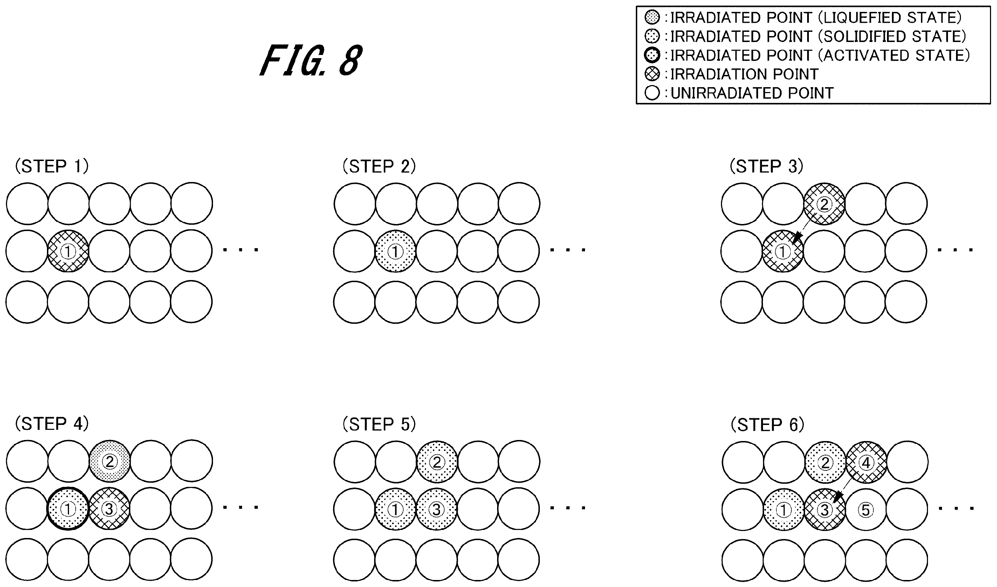

Next, a sixth irradiation pattern illustrating a sixth example of the beam irradiation step performed by the control apparatus 30 will be described with reference to FIG. 8.

FIG. 8 is a view illustrating the sixth irradiation pattern illustrating the sixth example of the beam irradiation step.

Points to be irradiated with the electron beam L1 illustrated in FIG. 8 are arranged in the first direction X and the second direction Y. The control apparatus 30 controls the beam deflector 10 to irradiate positions corresponding to the sixth irradiation pattern with the electron beam L1. In the sixth irradiation pattern, a plurality of unirradiated points constituting two rows adjacent to each other in the second direction Y are irradiated with the electron beam L1 in order from the left. A plurality of unirradiated points in each row are arranged in the first direction X.

In the sixth irradiation pattern, the beam deflector 10 first irradiates any unirradiated point 1 with the electron beam L1 (Step 1). The irradiation point 1 melts to turn into a liquefied state by being irradiated with the electron beam L1.

Next, the beam deflector 10 irradiates unirradiated point n (not illustrated), which is at least not adjacent to but apart from the irradiation point 1, with the electron beam L1 (Step 2). The irradiation point n melts to turn into the liquefied state by being irradiated with the electron beam L1. On the other hand, the irradiation point 1 turns into the solidified point 1.

Next, the beam deflector 10 irradiates unirradiated point 2 adjacent to the solidified point 1 with the electron beam L1. The unirradiated point 2 is located on the right of an unirradiated point above the solidified point **1.** That is, the unirradiated point 2 is adjacent to the solidified point 1 in the diagonal direction. The irradiation point 2 melts to turn into the liquefied state by being irradiated with the electron beam L1. Subsequently, the beam deflector 10 irradiates the solidified point 1 with the electron beam L1 (Step 3). Thus, the solidified point 1 turns into the activated point 1 .

Next, the beam deflector 10 irradiates unirradiated point 3 adjacent to the irradiation point 2 in the liquefied state and the activated point 1 with the electron beam L1 (Step 4). That is, before irradiating the next irradiation point 3 with the electron beam L1, the beam deflector 10 irradiates the solidified point 1, adjacent to the next irradiation point 3 and located on the left of the next irradiation point 3, with the electron beam L1.

The irradiation point 3 melts to turn into the liquefied state by being irradiated with the electron beam L1. At this time, the activated point 1 in the activated state and the irradiation point 2 in the liquefied state do not inhibit the melting of the irradiation point 3. Thus, the irradiation point 3 can be appropriately melted. The activated point 1 is more strongly bonded to the irradiation point 3 than the solidified point 1. As a result, the quality of the three-dimensional structure to be built can be improved.

Next, the beam deflector 10 irradiates unirradiated point m (not illustrated) at a position, which is at least not adjacent to but apart from the irradiation point 3, with the electron beam L1 (Step 5). The irradiation point m melts to turn into the liquefied state by being irradiated with the electron beam L1. On the other hand, the activated point 1, the irradiation point 2, and the irradiation point 3 coagulate to turn into the solidified points 1 to 3.

Next, the beam deflector 10 irradiates unirradiated point 4 located on the right of the solidified point 2 with the electron beam L1. The irradiation point 4 melts to turn into the liquefied state by being irradiated with the electron beam L1. Subsequently, the beam deflector 10 irradiates the solidified point 3 with the electron beam L1 (Step 6). Thus, the solidified point 3 turns into the activated point 3.

Thereafter, the beam deflector 10 irradiates unirradiated point 5 located on the right of the activated point 3 with the electron beam L1. As described above, after Step 5, irradiation of the electron beam L1 is repeated similarly to Step 2 to Step 4 while shifting a next irradiation point one by one to the right in an alternating manner between the upper and lower rows.

### [Seventh Irradiation Pattern]

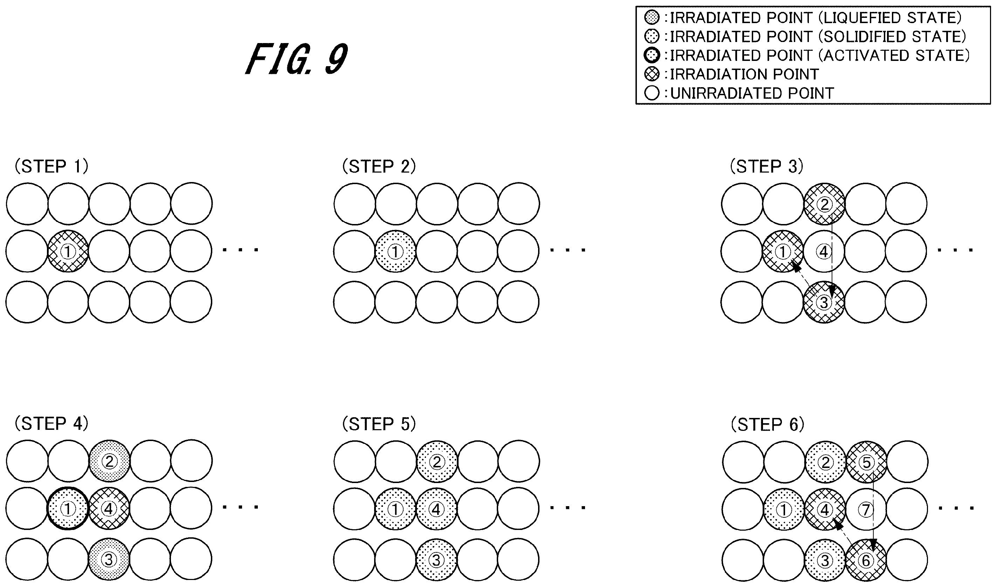

Next, a seventh irradiation pattern illustrating a seventh example of the beam irradiation step performed by the control apparatus 30 will be described with reference to FIG. 9.

FIG. 9 is a view illustrating the seventh irradiation pattern illustrating the seventh example of the beam irradiation step.

Points to be irradiated with the electron beam L1 illustrated in FIG. 9 are arranged in the first direction X and the second direction Y. The control apparatus 30 controls the beam deflector 10 to irradiate positions corresponding to the seventh irradiation pattern with the electron beam L1. In the seventh irradiation pattern, a plurality of unirradiated points constituting three rows arranged in the second direction Y are irradiated with the electron beam L1 in order from the left. A plurality of unirradiated points in each row are arranged in the first direction X.

In the seventh irradiation pattern, the beam deflector 10 first irradiates any unirradiated point 1 with the electron beam L1 (Step 1). The unirradiated point 1 is located in the middle row among the three rows in which the unirradiated points are arranged. The irradiation point 1 melts to turn into a liquefied state by being irradiated with the electron beam L1.

Next, the beam deflector 10 irradiates unirradiated point n (not illustrated), which is at least not adjacent to but apart from the irradiation point 1, with the electron beam L1 (Step 2). The irradiation point n melts to turn into the liquefied state by being irradiated with the electron beam L1. On the other hand, the irradiation point 1 turns into the solidified point 1.

Next, the beam deflector 10 irradiates unirradiated point 2 adjacent to the solidified point 1 with the electron beam L1. The unirradiated point 2 is located on the right of an unirradiated point above the solidified point 1. That is, the unirradiated point 2 is adjacent to the solidified point 1 in the diagonal direction. The irradiation point 2 melts to turn into the liquefied state by being irradiated with the electron beam L1.

Subsequently, the beam deflector 10 irradiates unirradiated point 3 adjacent to the solidified point 1 with the electron beam L1. The unirradiated point 3 is located on the right of an unirradiated point below the solidified point 1. That is, the unirradiated point 3 is adjacent to the solidified point 1 in the diagonal direction. The irradiation point 3 melts to turn into the liquefied state by being irradiated with the electron beam L1. Further, the beam deflector 10 irradiates the solidified point 1 with the electron beam L1 (Step 3). Thus, the solidified point 1 turns into the activated point 1.

Next, the beam deflector 10 irradiates unirradiated point 4 adjacent to the irradiation points 2 and 3 in the liquefied state and the activated point 1 with the electron beam L1 (Step 4). That is, before irradiating the next irradiation point 4 with the electron beam L1, the beam deflector 10 irradiates the solidified point 1, adjacent to the next irradiation point 4 and located on the left of the next irradiation point 4, with the electron beam L1.

The irradiation point 4 melts to turn into the liquefied state by being irradiated with the electron beam L1. At this time, the activated point 1 in the activated state and the irradiation points 2 and 3 in the liquefied state do not inhibit the melting of the irradiation point 4. Thus, the irradiation point 4 can be appropriately melted. The activated point 1 is more strongly bonded to the irradiation point 3 than the solidified point 1. As a result, the quality of the three-dimensional structure to be built can be improved.

Next, the beam deflector 10 irradiates unirradiated point m (not illustrated) at a position, which is at least not adjacent to but apart from the irradiation point 4, with the electron beam L1 (Step 5). The irradiation point m melts to turn into the liquefied state by being irradiated with the electron beam L1. On the other hand, the activated point 1 and the irradiation points 2 to 4 coagulate to turn into the solidified points 1 to 4.

Next, the beam deflector 10 irradiates unirradiated point 5 located on the right of the solidified point 2 with the electron beam L1. The irradiation point 5 melts to turn into the liquefied state by being irradiated with the electron beam L1. Further, the beam deflector 10 irradiates unirradiated point 6 located on the right of the solidified point 3 with the electron beam L1. The irradiation point 6 melts to turn into the liquefied state by being irradiated with the electron beam L1.
Furthermore, the beam deflector 10 irradiates the solidified point 4 with the electron beam L1 (Step 6). Thus, the solidified point 4 turns into the activated point 4.

Thereafter, the beam deflector 10 irradiates unirradiated point 7 located on the right of the activated point 4 with the electron beam L1. As described above, after Step 5, irradiation of the electron beam L1 is repeated similarly to Step 2 to Step 4 while shifting a next irradiation point one by one to the right in an alternating manner between the upper, middle, and lower rows.

### [Eighth Irradiation Pattern]

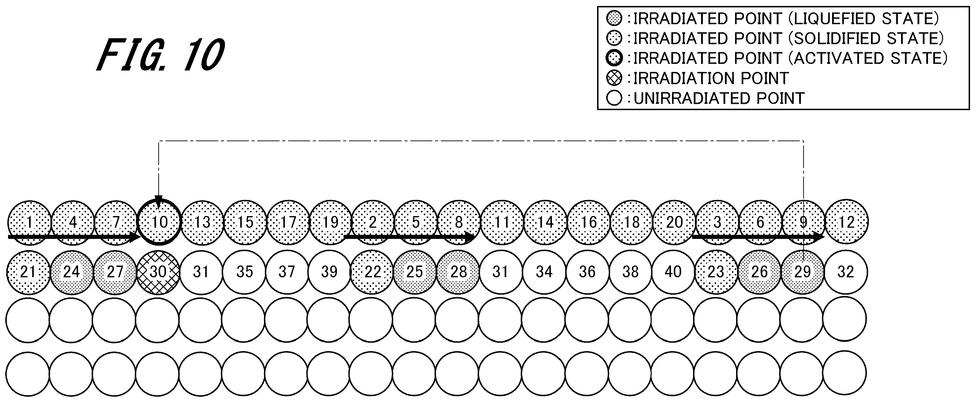

Next, an eighth irradiation pattern illustrating an eighth example of the beam irradiation step performed by the control apparatus 30 will be described with reference to FIG. 10.

FIG. 10 is a view illustrating the eighth irradiation pattern illustrating the eighth example of the beam irradiation step.

Points to be irradiated with the electron beam L1 illustrated in FIG. 10 are arranged in the first direction X and the second direction Y. The control apparatus 30 controls the beam deflector 10 to irradiate positions corresponding to the eighth irradiation pattern with the electron beam L1. In the eighth irradiation pattern, the electron beam L1 is irradiated in order from an upper row among a plurality of rows arranged in the second direction Y. The plurality of rows arranged in the second direction Y include a first horizontal row, a second horizontal row, a third horizontal row, and a fourth horizontal row in order from the top. A plurality of unirradiated points in each horizontal row are arranged in the first direction X.

In the eighth irradiation pattern, the beam deflector 10 first irradiates unirradiated point 1 located at a left end of the first horizontal row with the electron beam L1. Next, the beam deflector 10 irradiates unirradiated point 2 at a position not adjacent to but apart from the irradiation point 1 with the electron beam L1. Seven unirradiated points are arranged between the unirradiated point 2 and the unirradiated point 1. Next, the beam deflector 10 irradiates unirradiated point 3 at a position not adjacent to but apart from the irradiation point 2 with the electron beam L1. Seven unirradiated points are arranged between the unirradiated point 3 and the unirradiated point 2.

The beam deflector 10 irradiates unirradiated points with the electron beam L1 in the order of numbers illustrated in FIG. 10. An irradiation point gradually cools to a solidified point. For example, when unirradiated point 30 is irradiated with the electron beam L1, irradiation point 21 is the solidified point 21. On the other hand, irradiation points 22 to 29 are in the process of turning from the liquefied state to the solidified state.

For example, before irradiating the unirradiated point 30 (next irradiation point 30) with the electron beam L1, the beam deflector 10 irradiates solidified point 10 adjacent to the unirradiated point 30 with the electron beam L1. Thus, the solidified point 10 turns into the activated point 10. Thereafter, the beam deflector 10 irradiates the unirradiated point 30 with the electron beam L1. At this time, the activated point 10 and the irradiation point 27 in the liquefied state do not inhibit the melting of the irradiation point 30. Thus, the irradiation point 30 can be appropriately melted. The activated point 10 is more strongly bonded to the irradiation point 30 than the solidified point 10. As a result, the quality of the three-dimensional structure to be built can be improved.

For example, the beam deflector 10 irradiates a solidified point 19 and the solidified point 22 with the electron beam L1 before irradiating unirradiated point 39 (next irradiation point 39) with the electron beam L1. Thus, the solidified points 19 and 22 turn into the activated points 19 and 22. Thereafter, the beam deflector 10 irradiates the unirradiated point 39 with the electron beam L1. At this time, the activated points 19 and 22 and an irradiation point 37 in the liquefied state do not inhibit the melting of the irradiation point 39. Thus, the irradiation point 39 can be appropriately melted. The activated points 19 and 22 are more strongly bonded to the irradiation point 39 than the solidified points 19 and 22. As a result, the quality of the three-dimensional structure to be built can be improved.

The embodiment of the present invention have been described above. However, the present invention is not limited to the above-described embodiment, and various modifications can be made without departing from the gist of the invention described in the claims. For example, the above-described embodiment describes the present invention in detail in an easy-to-understand manner, and the present invention is not necessarily limited to one having all the described configurations. Further, some configurations of a certain embodiment can be replaced with configurations of another embodiment, and configurations of a certain embodiment can be added to the configurations of another embodiment. Further, it is possible to add, delete, and replace other configurations for some configurations of each embodiment.

In the first to eighth irradiation patterns according to the above-described embodiment, at least one solidified point adjacent to a next irradiation point is irradiated with the electron beam L1 to turn the solidified point into an activated point before irradiating the next irradiation point with the electron beam L1. However, as an electron beam irradiation pattern according to the present invention, a next irradiation point may be irradiated with the electron beam, and at least one solidified point adjacent to this irradiation point may be irradiated with the electron beam L1 before the irradiation point turns into the solidified state. In this case, since the solidified point irradiated with the electron beam L1 is in the activated state, a bonding state of a material can be made stronger than that in a case where the solidified point is not irradiated with the electron beam L1. As a result, the quality of the three-dimensional structure to be built can be improved.

Further, as an electron beam irradiation pattern according to the present invention, a next irradiation point may be irradiated with the electron beam after a part (for example, a first solidified point) of solidified points adjacent to the next irradiation point is irradiated with the electron beam, and then, another solidified point (for example, a second solidified point) adjacent to the next irradiation point may be irradiated with the electron beam. Even in this case, the next irradiation point can be appropriately melted, and the quality of the three-dimensional structure to be built can be improved.

The first to eighth irradiation patterns according to the above-described embodiment have been described by exemplifying points adjacent to the next irradiation point in the first direction X and the second direction Y. However, points adjacent to the next irradiation point according to the present invention may include points adjacent in a direction inclined with respect to the first direction X and the second direction Y.

In the first to eighth irradiation patterns according to the above-described embodiment, unirradiated points are irradiated with the electron beam L1 in order in the first direction X. However, there may be an irradiation pattern according to the present invention in which unirradiated points are irradiated with the electron beam L1 in order in the second direction Y.

Although the example in which the electron gun 2 that emits the electron beam L1 is applied as the beam emitter has been described in the above-described embodiment, the present invention is not limited thereto. For example, an irradiation gun that emits a laser beam may be employed as the beam emitter according to the present invention. In this case, an unirradiated point of the powder material M1 may be irradiated with the laser beam to be melted and coagulated.

### Reference Signs List

- 1: Three-dimensional powder bed fusion additive manufacturing (PBF-AM) apparatus
- 2: Electron gun (beam emitter)
- 3: Deflection amplifier
- 4: Lens
- 5: Powder material storage
- 6: Stage
- 7: Powder layer raking arm
- 8: Coordinate conversion correction circuit
- 10: Beam deflector
- 21: Emitter
- 22: Extraction electrode
- 23: Acceleration electrode
- 24: Acceleration power source
- 30: Controller
- L1: Electron beam
- M1: Powder material

## Claims

1. A three-dimensional powder bed fusion additive manufacturing (PBF-AM) apparatus (1) comprising:
a stage (6) on which a powder layer formed of a powder material is spread;
a beam emitter (2) configured to emit a beam toward the powder layer spread on the stage (6);
a beam deflector (10) configured to deflect the beam emitted from the beam emitter (2); and
a controller (30) configured to control the beam deflector (10),
wherein, when a point to be irradiated with the beam next in the powder layer is defined as a next irradiation point and points that have been irradiated with the beam and solidified are defined as solidified points, the controller (3) controls the beam deflector (10) to irradiate at least one of the solidified points adjacent to the next irradiation point with the beam and then irradiate the next irradiation point with the beam, or to irradiate the next irradiation point with the beam and then irradiate at least one of the solidified points adjacent to the next irradiation point with the beam before the next irradiation point is solidified.

2. The three-dimensional PBF-AM apparatus (1) according to claim 1, wherein
in a case where there are two or more of the solidified points, the controller (30) causes the solidified point excluding the latest solidified point to be irradiated with the beam.

3. The three-dimensional PBF-AM apparatus (1) according to claim 1, wherein
the controller (30) causes a pair of the solidified points sandwiching the next irradiation point to be irradiated with the beam.

4. The three-dimensional PBF-AM apparatus (1) according to claim 1, wherein
the controller (30) causes two or more of the solidified points to be irradiated with the beam in order from the solidified point solidified earlier with the beam.

5. The three-dimensional PBF-AM apparatus (1) according to claim 1, wherein
when a point, adjacent to an irradiation point that is a point that has been irradiated with the beam in the powder layer, is defined as the next irradiation point, the controller (30) causes a point, which is at least not adjacent to the irradiation point, to be irradiated with the beam during a waiting time until the irradiation point turns into the solidified point.

6. The three-dimensional PBF-AM apparatus (1) according to claim 1, wherein
the controller (30) causes a first solidified point adjacent to the next irradiation point to be irradiated with the beam, then causes the next irradiation point to be irradiated with the beam, and causes a second solidified point, adjacent to the next irradiation point and different from the first solidified point, to be irradiated with the beam before the next irradiation point is solidified.

7. A three-dimensional powder bed fusion additive manufacturing method comprising:
when a point to be irradiated with a beam next in a powder layer spread on a stage (6) is defined as a next irradiation point and points that have been irradiated with the beam and solidified are defined as solidified points,
an activation step of irradiating at least one of the solidified points adjacent to the next irradiation point with the beam by a beam deflector (10) controlled by a controller (30); and
a main irradiation step of irradiating the next irradiation point with the beam by the beam deflector (10) controlled by the controller (30),
wherein the activation step is executed at least one of before and after the main irradiation step.
